# EUROPÄISCHE PATENTANMELDUNG

(11) **EP 4 528 235 A1**
(43) Veröffentlichungstag der Anmeldung: **26.03.2025**
(21) Anmeldenummer: 24202278.8
(22) Anmeldetag: 24.09.2024
(51) Int. Cl.: G01F 23/292, B65D 90/48, G01F 23/80, G01L 19/00

(54) **VORRICHTUNG ZUR BESTIMMUNG UND/ODER ÜBERWACHUNG MINDESTENS EINER PHYSIKALISCHEN PROZESSGRÖSSE EINES IN EINEM, MIT EINEM DECKEL VERSCHLIESSBAREN BEHÄLTER BEFINDLICHEN MEDIUMS**

(30) Priorität: 25.09.2023 DE 102023125902
(71) Anmelder: NXTGN Solutions GmbH, 92318 Neumarkt (DE)
(72) Erfinder: Franke, Patrick, 92318 Neumarkt (DE)
(74) Vertreter: Meissner Bolte Partnerschaft mbB

(57) **Zusammenfassung**

Die Erfindung betrifft eine Vorrichtung zur Bestimmung und/oder Überwachung mindestens einer physikalischen Prozessgröße eines in einem, mit einem Deckel verschließbaren Behälter befindlichen Mediums mit mindestens einer Sensoreinheit, welche in einer vorbestimmten Position relativ zum oder am Behälter anbringbar ist und diesbezüglich der Behälter eine Zugangsöffnung aufweist. Erfindungsgemäß ist die Sensoreinheit über einen Adapter am Behälterdeckel fixierbar, wobei eine Signalvorverarbeitungs- und Auswerteeinheit mit Telemetrieeinrichtung und der Möglichkeit der Erfassung der Geoposition des Behälters fest am Behälter befindlich ist.

## Beschreibung

Die Erfindung betrifft eine Vorrichtung zur Bestimmung und/oder Überwachung mindestens einer physikalischen Prozessgröße eines in einem, mit einem Deckel verschließbaren Behälter befindlichen Mediums mit mindestens einer Sensoreinheit, welche in einer vorbestimmten Position relativ zum oder am Behälter anbringbar ist und diesbezüglich der Behälter eine Zugangsöffnung aufweist, gemäß Oberbegriff des Anspruches 1.

Aus der DE 103 08 086 B3 ist ein Befestigungssystem für ein Messgerät vorbekannt, wobei das Messgerät mindestens einen Sensorabschnitt aufweist und die Befestigung in oder an einem Behälter erfolgen soll.

Das Messgerät dient der Bestimmung und/oder Überwachung einer physikalischen oder chemischen Prozessgröße eines Mediums in dem Behälter.

Das Messgerät wird durch eine Muffe hindurch mit mindestens seinem Sensorabschnitt so angeordnet, dass dieser Abschnitt in den Behälter hineinragt. In der Muffe ist ein Adapterring vorgesehen, der Abschnitte unterschiedlicher Durchmesser besitzt. Der Sensorabschnitt des Messgerätes ist durch den Adapterring hindurchführbar.

Bei dem Verfahren zum Betrieb eines Containers für wässriges Füllgut besitzt der Behälter einen Gasanschluss, mittels dessen eine Schutzgasleitung an dem Behälter anschließbar ist.

Die vorbekannte Lösung zielt auf das Problem, ein Verfahren bereitzustellen, mit dessen Hilfe ein Füllstand eines jeweiligen Containers einfach ermittelbar ist. Die Füllstandsveränderung wird über die erkannte Variation des Druckes mit Hilfe eines Drucksensors ermittelt, wobei zusätzlich ein sogenanntes Datenlogging und eine kabellose Übertragung der Daten mit Hilfe eines Mobilfunknetzes vorgeschlagen ist.

Der Container umfasst mindestens eine Sensoreinheit, die ein Adapterelement aufweist. Das Adapterelement ist dazu geeignet, lösbar an den Gasanschluss des Behälters angeschlossen zu werden, so dass die Sensoreinrichtung an den Container koppelbar ist. Das Adapterelement umfasst mindestens einen Gasstutzen und mindestens einen Mediumkanal, wobei der Gasstutzen dazu geeignet ist, eine Schutzgasleitung aufzunehmen.

Ferner umfasst die Sensoreinrichtung mindestens einen Drucksensor, der mittelbar mit dem Mediumkanal zusammenwirkt.

Die Oberseite des Containers nach DE 10 2018 106 786 A1 umfasst einen Deckel, der einen Gasanschluss und ein Überdruckventil enthält. Das erwähnte Adapterelement besitzt einen Anschlussabschnitt, der in komplementärer Weise zu dem Gasstutzen des Gasanschlusses des Behälters ausgeführt ist. Auf diese Weise ist die vorbekannte Sensoreinrichtung an dem Gasstutzen fixierbar, wobei die Sensoreinrichtung auf den Gasstutzen aufsteckbar ist. Ein Telemetriemodul der Sensoreinrichtung umfasst eine Mehrzahl von Sensoren sowie einen Geopositionssensor und einen Datenlogger. Diese Bauteile sind gemeinsam in einem Gehäuse untergebracht. Alle vorgenannten Elemente sind gemäß einer dortigen bevorzugten Ausführungsform zusammen am Deckel des Behälters bzw. Containers fest angeordnet.

Für den Fall, dass der Behälterdeckel mit der gesamten Sensoreinrichtung nebst Telemetrieeinheit abgenommen wird, besteht die Gefahr, dass eine körperlich räumliche und damit sachliche Zuordnung zwischen dem eigentlichen Behälter und dem Behälterdeckel verlorengeht.

Aus dem Vorgenannten ist es Aufgabe der Erfindung, eine weiterentwickelte Vorrichtung zur Bestimmung und/oder Überwachung mindestens einer physikalischen Prozessgröße eines in einem, mit einem Deckel verschließbaren Behälter befindlichen Mediums mit mindestens einer Sensoreinheit anzugeben, welche zum einen nachrüstbar ist und die zum anderen eine eindeutige Zuordnung der erfassten Messdaten einschließlich einer Geoposition zum jeweiligen Behälter ermöglicht, und zwar unabhängig davon, ob ein ursprünglich zugehöriger Behälterdeckel nach wie vor zum Verschluss des entsprechenden Behälters verwendet wird oder ein anderer, vom Grundsatz her geeigneter Deckel zum Einsatz kommt.

Die Lösung der Aufgabe der Erfindung erfolgt mit einer Vorrichtung gemäß der Merkmalskombination nach Patentanspruch 1, wobei die Unteransprüche mindestens zweckmäßige Ausgestaltungen und Weiterbildungen umfassen.

Es wird demnach von einer Vorrichtung zur Bestimmung und/oder Überwachung mindestens einer physikalischen Prozessgröße eines in einem, mit einem Deckel verschließbaren Behälter befindlichen Mediums ausgegangen, wobei mindestens eine Sensoreinheit vorhanden ist, welche in einer vorgegebenen Position relativ zum oder am Behälter anbringbar ist. Diesbezüglich weist der Behälter eine an sich begrenzte Zugangsöffnung, zum Beispiel eine Befüllöffnung oder Entlüftungsöffnung auf.

Erfindungsgemäß ist die Zugangsöffnung am Deckel des Behälters ausgebildet bzw. es wird eine am Behälter vorhandene Zugangsöffnung bereitgestellt, wobei an der Zugangsöffnung ein Adapter befestigbar ist, welcher die Sensoreinheit aufnimmt, welche mindestens eine zum Medium berührungslose Füllstandsmesseinrichtung sowie eine Druckmesseinrichtung aufweist.

Weiterhin ist fest, das heißt mit üblichen Mitteln nicht einfach lösbar am Behälter eine Signalvorverarbeitungs- und Auswerteeinheit mit Telemetrieeinrichtung angeordnet, welche zusätzlich die Geoposition des Behälters erfasst und eine Datenübertragung sowohl der Prozessgrößen als auch der Geoposition zur Fernüberwachung des Behälters ermöglicht.

Für die Datenübertragung kann ein übliches Telekommunikationsnetz Anwendung finden.

Die Datenübertragung kann hin zu einer übergeordneten Leitstelle oder aber auch in die sogenannte Cloud unter Nutzung des Internets vorgenommen werden.

Weiterhin ist erfindungsgemäß zwischen der Sensoreinheit bzw. dem Adapter mit Sensoreinheit und der Signalvorverarbeitungs- und Auswerteeinheit eine lösbare elektrische Kabelverbindung ausgebildet, so dass eine Entfernung oder ein Austausch des Deckels unabhängig von einem Tracking des jeweiligen Behälters erfolgen kann.

Die Kabelverbindung ist mit Hilfe einer Schnelltrennkupplung trennbar, so dass bei üblichen Reinigungsarbeiten nebst Entfernung des Deckels keine Störungen und zusätzlichen Arbeitsgänge oder Handlungen erforderlich werden.

Der Adapter ist mit einem Standardanschluss einer Medienfüll- oder einer Behälterentlüftungsöffnung koppelbar, wobei der Adapter einen Durchgang für die Sensoreinheit und die lösbare Kabelverbindung sowie einen Abzweig aufweist.

Der Abzweig dient dem Erhalt der Funktion des Standardanschlusses als Medienfüll- oder Behälterentlüftungsöffnung.

Der Durchgang im Adapter ist so realisiert, dass ein optischer Füllstandssensor, insbesondere ein Laser-Entfernungsmesser eine freie Sicht auf den Füllstand, das heißt den Oberflächenspiegel eines flüssigen, im Behälter befindlichen Mediums hat. Der Durchgang sichert auch eine druckseitige Verbindung zwischen dem Behälterinneren und einem Drucksensor.

Mittels der laufenden Erfassung des Füllstandes und des Druckes, insbesondere eines Überdruckes im Behälter kann nebst dem Tracking des Behälters festgestellt werden, ob ein insbesondere Schutzgasüberdruck auf dem Weg von der Füllung des Behälters bis zum Verbraucher eingehalten wurde und nicht die Gefahr einer Dekontaminierung bestand, was insbesondere bei aseptischen und anderen sensiblen Behälterinhalten, insbesondere bei Lebensmitteln von großer Bedeutung ist.

Wie bereits erwähnt, weist die Kabelverbindung eine elektrische, schnell trennbare, feuchtegeschützte mehrpolige Kupplung auf.

Die Signalvorverarbeitungs- und Auswerteeinrichtung verfügt über eine autarke Stromversorgung und ist bauseitig in der Nähe des Behälterdeckels, insbesondere in der Nähe eines Behälter-Mannloches angeordnet.

Der Kabelausgang am Adapter ist druckdicht ausgeführt.

Die Füllstandsmesseinrichtung basiert bevorzugt auf der Basis eines optischen Sensors, insbesondere auf der Basis einer Laserentfernungsmessung.

Die Füllstandsmesseinrichtung und die Druckmesseinrichtung sind bevorzugt auf einer gemeinsamen Sensorplatine, gegebenenfalls zusammen mit einer Signalvorverarbeitungseinheit angeordnet.

Störungen in der Signalerfassung oder aber auch eine Unterbrechung der Verbindung zwischen Sensoreinheit und fest am Behälter angeordneter Elektronikbaugruppe werden protokolliert bzw. sind per Fernübertragung abrufbar.

Die Erfindung soll nachstehend anhand eines Ausführungsbeispieles sowie von Figuren näher erläutert werden.

Hierbei zeigen:

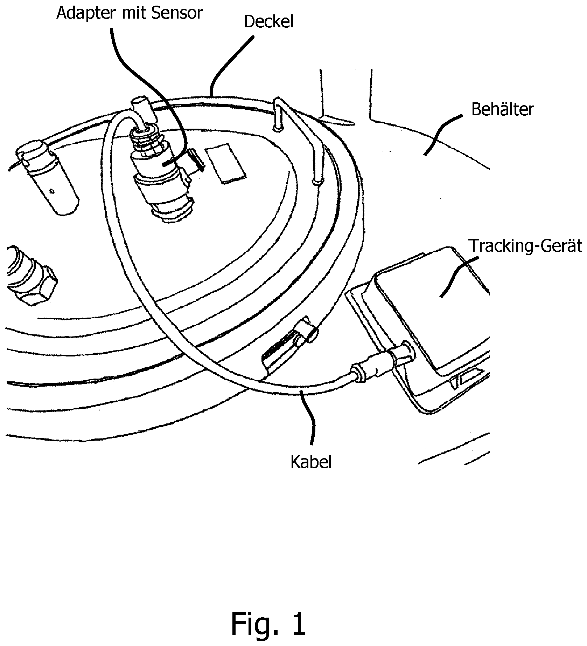

- Fig. 1: eine fotorealistische Ansicht auf die Oberseite eines Behälters mit Mannloch und Deckel, wobei auf einer Standard-Füllöffnung im Deckel der erfindungsgemäße Adapter mit Sensoreinheit angeordnet ist sowie die Kabelverbindung mit Steckeinrichtung zur Trennung hin zur fest am Behälter befindlichen Signalvorverarbeitungs- und Auswerteeinheit mit Telemetrieeinrichtung und einer Empfangseinrichtung zur Bestimmung der Geoposition des Behälters;

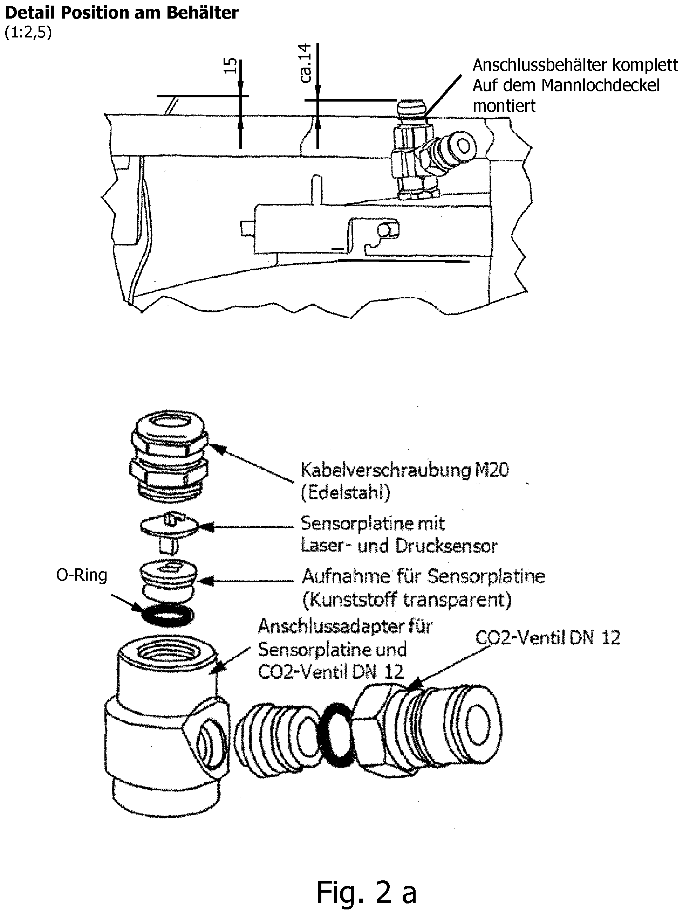

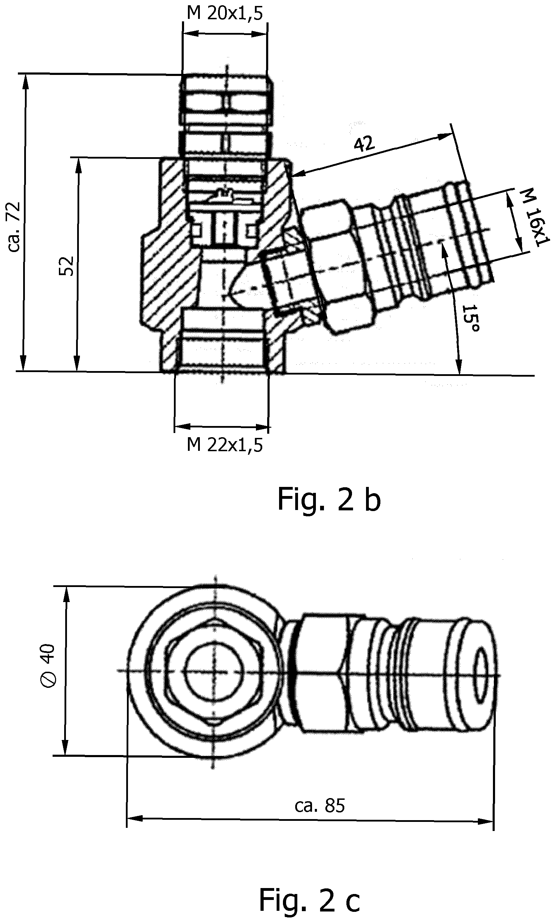

- Fig. 2: Detaildarstellungen in Form einer Explosivdarstellung, einer Schnittdarstellung sowie einer Seitenansicht und einer Draufsicht des Adapters mit Sensoreinheit in seiner Funktion als Messkopf, angeordnet auf einem Behälterdeckel.

Das erfindungsgemäße Ausführungsbeispiel betrifft eine Vorrichtung und ein Verfahren zur drahtlosen und kontinuierlichen Fernüberwachung des Zustandes von industriellen Containern mittels nicht medienberührender Sensorik, geeignet für Lebensmittel und andere sensible Inhalte.

Überwacht werden die Geoposition des Behälters, der Füllstand im Behälter und der Innendruck im Behälter sowie weitere Parameter.

Industrielle Container bestehen üblicherweise aus einem Edelstahlmaterial und dienen zur Lagerung und Transport von Flüssigkeiten und anderen Inhalten. Entsprechende Container lassen sich mittels eines Deckels über ein Mannloch dicht abschließen. Bekannte Deckel weisen mindestens zwei Anschlüsse auf. Ein erster Anschluss dient der Befüllung des Containers mit dem entsprechenden Medium. Ein zweiter Anschluss stellt einen Hilfsanschluss dar, der die Belüftung des Containers oder die Erzeugung eines Innenüberdruckes ermöglicht. Dies dient einerseits der Dichtheitsprüfung, aber andererseits auch der Vermeidung des Eindringens von Verunreinigungen aufgrund eines dauernden Überdruckes.

Die Erfindung umfasst einen Messkopf in Form eines Adapters, ebenfalls beispielhaft aus Edelstahl mit integrierten Sensoren und entsprechend industriellen Anschlüssen, bevorzugt als T-Adapterstück realisiert. Weiterhin ist eine Tracking-Einheit mit Mobilfunkmodul und autarker Stromversorgung, insbesondere batteriebetrieben vorhanden. Diese Trackingeinheit umfasst eine Signalvorverarbeitungs- und Auswerteeinheit mit Telemetrieeinrichtung und ist in der Lage, die Geoposition des Behälters zu erfassen. Insofern ist die Trackingeinheit fest mit dem Behälter verbunden.

Die Trackingeinheit umfasst eine Software zur Datenauswertung und Vorverarbeitung. Die Trackingeinheit ermöglicht auch die bereits erwähnte drahtlose Kommunikation, insbesondere das Hochladen von Daten in die Cloud. Dies dient letztendlich zum Bereitstellen einer Fernüberwachungsfunktion einzelner oder einer Gruppe von entsprechend ausgerüsteten Containern bzw. Behältern.

Da es sich bei den Behältern üblicherweise um Standardausführungen handelt, soll nach Möglichkeit keine nicht rückrüstbare Veränderung am Behälter vorgenommen werden. Insofern ist es ein wesentliches Merkmal der Erfindung, dass die hier vorliegende Lösung auch an vorhandenen Containern bzw. Containerdeckeln nachgerüstet werden kann.

Diesbezüglich wird der Messkopf auf einen vorhandenen Behälterdeckel nachgerüstet. Der Messkopf wird z.B. an einem Befüllanschluss angebracht.

Hierdurch erlangen die Sensoren im Adapter bzw. dem Messkopf Zugang zum Inneren des Containers.

Über den erwähnten Abzweig lässt sich der Hilfsanschluss wie vorher zur Belüftung oder zur Erzeugung von Überdruck, d.h. zur Befüllung mit einem Gas nutzen.

Die Trackingeinrichtung wird an geeigneter Stelle, bevorzugt auf der Oberseite des Containers angebracht. Hierdurch ist ein bestimmtes, adressenartig eindeutig definiertes Trackinggerät dauerhaft einem entsprechenden Container zuordenbar.

Über die Kabelverbindung mit Schnellverschluss wird der Messkopf mit dem Trackinggerät verbunden.

Nach Aktivierung der Trackingeinheit wird die gewünschte Fernüberwachung gestartet. Dem Anwender stehen nun die Geoposition, der Füllstand, der Innendruck und weitere Parameter des Containers in einer entsprechenden Cloud-Anwendung in Echtzeit zur Verfügung.

Die erfindungsgemäße Lösung ist lebensmittelecht und für sensible Anwendungen geeignet. Insofern ist das System nicht medienberührend. Für den Fall einer dennoch eintretenden Medienberührung sind die Sensoren im Messkopf mit einer speziellen lebensmittelechten Abdeckung geschützt. Verunreinigungen sind hierdurch ausgeschlossen. Weiterhin ist eine Reinigung leicht möglich.

Der Messkopf ist innerhalb des Adapters sehr kompakt. Die Sensoren sind vollständig in den Messkopf, das heißt im Adapter integriert und vor störenden Einflüssen geschützt.

Durch die optische Füllstandsmessung ist keine manuelle Justierung notwendig. Jeder entsprechend ausgerüstete Container oder Behälter ist durch das Trackinggerät eindeutig und dauerhaft identifizierbar, während die jeweiligen Deckel mit Messkopf austauschbar sind. Selbiges erleichtert die Arbeitsabläufe bei Reinigung und Wartung der Container, da in diesem Fall die Deckel abgenommen werden und später die entsprechenden Deckel auf beliebige andere Container aufsetzbar sind.

Die Adapter mit den Sensoren, das heißt der komplette Messkopf ist hermetisch dicht und schließt den Hilfsabschluss ab, so dass aus dem Container kein Inhalt entweichen kann und der entsprechende Druck im Container erhalten bleibt.

Das Trackinggerät befindet ich in einem den entsprechenden Umgebungsbedingungen und Umwelteinflüssen genügenden beständigen Gehäuse, insbesondere in einem Kunststoffgehäuse. Das Trackinggerät enthält die notwendigen Elektronikbaugruppen mit Prozessor, Funkmodem, Antenne und gegebenenfalls ein Modul zum Empfang von Geopositionsdaten sowie entsprechenden Schnittstellen für den Füllstandssensor bzw. den Drucksensoren, die sich extern im Adapter, das heißt in dem Messkopf befinden. Ein Schnellverschluss der Kabelverbindung erleichtert die notwendige Trennung von Trackinggerät und Messkopf.

Nach entsprechender Ausrüstung eines Containers, Befüllung und Inbetriebnahme der erfindungsgemäßen Vorrichtung ergibt sich folgendes Procedere.

Der als Laser-Sensor ausgeführte Füllstandsmesser misst aus dem Messkopf die Entfernung nach unten zur Oberfläche des Medium im Container.

Der Drucksensor misst den herrschenden Absolutdruck im Container.

Das Trackinggerät ist nun in der Lage, die Messwerte der Sensoren über die Kabelverbindung auszulesen und berechnet aus dem Messwert des Lasersensors den Füllstand im Container.

Weiterhin berechnet das Trackinggerät aus dem Messwert des Drucksensors den korrigierten Innenüberdruck.

Das Trackinggerät liest nun von einem GNSS-Modul (Global Navigation Satelite System) die Geoposition, das heißt den Längen- und Breitengrad des aktuellen Standortes des Behälters.

Nun stellt das Trackinggerät mittels Funkmodem eine verschlüsselte Verbindung zu einer Cloud-Anwendung her.

Nunmehr überträgt das Trackinggerät den Zustand des Systems, das heißt die Identifikation des Trackinggerätes, die Geoposition, den Füllstand, den Innendruck und gegebenenfalls weitere Parameter über die Funkverbindung zur Cloud-Anwendung.

Die Cloud-Anwendung stellt nun die empfangenen Daten als Fernwartungszustand des Behälters und damit des Containers dem Anwender in einer Benutzeroberfläche in Echtzeit dar, zum Beispiel in Form einer Karte, Liste oder dergleichen.

Das Trackinggerät veranlasst wiederholte Messungen und eine wiederholte Übertragung nach definierten Regeln. Somit besteht in der Cloud-Anwendung eine kontinuierliche Menge von aktualisierten Echtzeitdaten.

Bei einer Mehrzahl entsprechend ausgerüsteter Container ist eine Fernüberwachung ganzer Flotten realisierbar, wobei diesbezüglich eine entsprechende Adressierung und Kodierung der Behälter und der jeweils vom Behälter gelieferten Daten erfolgt.

Alternativ zur vorerwähnten Kabelverbindung zwischen Adapter mit der Sensoreinrichtung und dem Tracking-Gerät besteht die Möglichkeit einer drahtlosen Nahfeldkopplung mit kodierter und adressierbarer Datenübertragung. Eine Datenübertragung setzt voraus, dass ein erfolgreiches Pairing stattgefunden hat. Dieses Pairing definiert Deckel mit Adapter und den jeweiligen Behälter. Unterbrechungen der drahtlosen Verbindung, z.B. bei Entfernung des Deckels, werden erkannt und per Fernüberwachung registriert.

## Patentansprüche

1. Vorrichtung zur Bestimmung und/oder Überwachung mindestens einer physikalischen Prozessgröße eines in einem, mit einem Deckel verschließbaren Behälter befindlichen Mediums mit mindestens einer Sensoreinheit, welche in einer vorbestimmten Position relativ zum oder am Behälter anbringbar ist und diesbezüglich der Behälter eine Zugangsöffnung aufweist,
**dadurch gekennzeichnet, dass**
die Zugangsöffnung am Deckel des Behälters ausgebildet wird oder eine bereits vorhandene Zugangsöffnung am Deckel des Behälters bereitgestellt ist, wobei an der Zugangsöffnung ein Adapter befestigbar ist, welcher die Sensoreinheit aufnimmt, welche mindestens, bezogen auf das Medium berührungslose Füllstandsmesseinrichtung sowie eine Druckmesseinrichtung aufweist,
weiterhin fest am Behälter eine Signalverarbeitungs- und Auswerteeinheit mit Telemetrieeinrichtung angeordnet ist, welche zusätzlich die Geoposition des Behälters erfasst und eine Datenübertragung sowohl der Prozessgrößen als auch der Geoposition zur Fernüberwachung ermöglicht, wobei zwischen der Sensoreinheit bzw. dem Adapter mit Sensoreinheit und der Signalverarbeitungs- und Auswerteeinheit eine lösbare elektrische Kabelverbindung oder eine drahtlose Nahfeldverbindung ausgebildet ist, so dass eine Entfernung oder ein Austausch des Deckels unabhängig von einem Tracking des jeweiligen Behälters erfolgen kann.

2. Vorrichtung nach Anspruch 1,
**dadurch gekennzeichnet, dass**
der Adapter mit einem Standardanschluss einer Medienfüll- oder einer Behälterentlüftungsöffnung koppelbar ist, wobei der Adapter einen Durchgang für die Sensoreinheit und die lösbare Kabelverbindung sowie einen Abzweig aufweist, welcher den Erhalt der Funktion als Medienfüll- oder Behälterentlüftungsöffnung sichert.

3. Vorrichtung nach Anspruch 1 oder 2,
**dadurch gekennzeichnet, dass**
die Kabelverbindung eine elektrische, schnell trennbare, feuchtegeschützte mehrpolige Kupplung aufweist.

4. Vorrichtung nach einem der vorangegangenen Ansprüche,
**dadurch gekennzeichnet, dass**
die Signalverarbeitungs- und Auswerteeinheit über eine autarke Stromversorgung verfügt und bauseitig in der Nähe des Behälterdeckels, insbesondere in der Nähe eines Behälter-Mannloches angeordnet ist.

5. Vorrichtung nach einem der vorangegangenen Ansprüche,
**dadurch gekennzeichnet, dass**
der Adapter kabelausgangsseitig druckdicht ausgeführt ist.

6. Vorrichtung nach einem der vorangegangenen Ansprüche,
**dadurch gekennzeichnet, dass**
die Füllstandsmesseinrichtung einen Laserentfernungsmesser aufweist.

7. Vorrichtung nach einem der vorangegangenen Ansprüche,
**dadurch gekennzeichnet, dass**
die Füllstandsmesseinrichtung und die Druckmesseinrichtung auf einer gemeinsamen Sensorplatine mit Signalvorverarbeitungseinheit angeordnet sind.

8. Vorrichtung nach einem der vorangegangenen Ansprüche,
**dadurch gekennzeichnet, dass**
Störungen in der Signalerfassung oder eine Unterbrechung der Verbindung Sensoreinheit und fest am Behälter angeordneter Signalverarbeitungs- und Auswerteeinheit protokolliert werden und per Fernüberwachung abrufbar sind.
